# EUROPEAN PATENT APPLICATION

(11) **EP 4 845 048 A1**
(43) Date of publication of application: **25.11.2026**
(21) Application number: 25742128.9
(22) Date of filing: 10.01.2025
(51) Int. Cl.: H04B 7/06, H04B 7/0456, H04W 72/231, H04L 5/00

(54) **METHOD PERFORMED BY TERMINAL OR NETWORK IN WIRELESS COMMUNICATION SYSTEM AND DEVICE THEREFOR**

(30) Priority: 17.01.2024 US 202463621592 P
(71) Applicant: LG Electronics Inc., Yeongdeungpo-gu Seoul 07336 (KR)
(72) Inventor: PARK, Haewook, Seoul 06772 (KR); KIM, Hyungtae, Seoul 06772 (KR); KIM, Seonwook, Seoul 06772 (KR); KIM, Kijun, Seoul 06772 (KR); KANG, Jiwon, Seoul 06772 (KR)
(74) Representative: Frenkel, Matthias Alexander
(86) International application number: PCT/KR2025/000571
(87) International publication number: WO 2025/155033

(57) **Abstract**

According to at least one of embodiments of the present disclosure, a user equipment (UE) includes receiving information about channel state information (CSI) reporting configuration via higher layer signaling, obtaining CSI based on L CSI-reference signal (CSI-RS) resources from among K CSI-RS resources, and transmitting a CSI report based on the CSI, wherein, from among the L CSI-RS resources, P CSI-RS resources are determined through information about the CSI reporting configuration, and remaining L-P CSI-RS resources are selected by the UE, and the CSI report includes L-P CSI-RS resource indicators (CRIs) for the L-P CSI-RS resources selected by the UE.

## Description

### TECHNICAL FIELD

The present disclosure relates to a wireless communication system, and more specifically, to a method for transmitting or receiving an uplink/downlink wireless signal by a terminal or a network in a wireless communication system and an apparatus therefor.

### BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In NR Rel.15 to 18, up to 32-Tx port CSI-RS transmission is supported, and a CSI-RS resource indicator (CRI) is defined that indicates the CSI-RS used for a CSI report by a UE, and 1 CRI is related to 1 CSI report.

To increase system throughput in NR Rel-19, discussions have been underway to expand to up to 128 port CSI-RS.

### DISCLOSURE

### Technical Problem

An object of the present disclosure is to provide a method of efficiently performing a wireless signal transmission and reception process and a device therefor. For example, methods are provided for a CSI report to a plurality of CRIs.

In addition to the object described above, other objects may be inferred from the description below.

### Technical Solution

According to an aspect, a method performed by a user equipment (UE) includes receiving information about channel state information (CSI) reporting configuration via higher layer signaling, obtaining CSI based on L CSI-reference signal (CSI-RS) resources from among K CSI-RS resources, and transmitting a CSI report based on the CSI, wherein, from among the L CSI-RS resources, P CSI-RS resources are determined through information about the CSI reporting configuration, and remaining L-P CSI-RS resources are selected by the UE, and the CSI report includes L-P CSI-RS resource indicators (CRIs) for the L-P CSI-RS resources selected by the UE.

The L-P CSI-RS resources may be selected from among the remaining K-P CSI-RS resources excluding the P CSI-RS resources from among the K CSI-RS resources.

Each of the L-P CRIs may include bits for indicating which of the K-P CSI-RS resources each CRI is related to.

The total number of bits included in each CRI may be determined based on K-P.

The CSI report may be related to a Type-2 CSI codebook. A combination of parameters configuring the Type-2 CSI codebook may be configured commonly to the L CSI resources.

The CSI report may be configured to separately report a rank indicator (RI) for each of the L CSI-RS resources.

The CSI report may be configured to separately report a channel quality indicator (CQI) for each of the L CSI-RS resources.

A codebook subset restriction (CBSR) for a CSI codebook may be configured for each CSI-RS resource.

For example, the L-P CSIs for the L-P CSI-RS resources may be sorted according to the order in which the L-P CRIs are arranged in the CSI report.

According to another aspect of the present disclosure, a non-transitory computer-readable recording medium having recorded thereon a program for performing the method described above may be provided.

According to another aspect, a device includes a memory configured to store instructions, and a processor configured to execute the instructions to perform operations, wherein the operations of the processor include receiving information about channel state information (CSI) reporting configuration via higher layer signaling, obtaining CSI based on L CSI-reference signal (CSI-RS) resources from among K CSI-RS resource, and transmitting a CSI report based on the CSI, from among the L CSI-RS resources, P CSI-RS resources are determined through information about the CSI reporting configuration, and remaining L-P CSI-RS resources are selected by the UE, and the CSI report includes L-P CSI-RS resource indicators (CRIs) for the L-P CSI-RS resources selected by the UE.

The device may further include a transceiver.

The device may be a user equipment (UE) in a wireless communication system.

The device may be a processing device configured to control a user equipment (UE) in a wireless communication system.

According to another aspect, a method performed by a base station (BS) includes transmitting information about channel state information (CSI) reporting configuration to a user equipment (UE) via higher layer signaling, and receiving a CSI report from the UE for L CSI-reference signal (CSI-RS) resources from among K CSI-RS resources configured in the UE, wherein, from among the L CSI-RS resources, P CSI-RS resources are determined through information about the CSI reporting configuration, and remaining L-P CSI-RS resources are selected by the UE, and the CSI report includes L-P CSI-RS resource indicators (CRIs) for the L-P CSI-RS resources selected by the UE.

According to another aspect, a base station (BS) for wireless communication includes a memory configured to store instructions, and a processor configured to execute the instructions to perform operations, wherein the operations of the processor include transmitting information about channel state information (CSI) reporting configuration to a user equipment (UE) via higher layer signaling, and receiving a CSI report from the UE for L CSI-reference signal (CSI-RS) resources from among K CSI-RS resources configured in the UE, from among the L CSI-RS resources, P CSI-RS resources are determined through information about the CSI reporting configuration, and remaining L-P CSI-RS resources are selected by the UE, and the CSI report includes L-P CSI-RS resource indicators (CRIs) for the L-P CSI-RS resources selected by the UE.

### Advantageous Effects

According to the present disclosure, wireless signal transmission and reception may be efficiently performed in a wireless communication system. For example, CSI reporting may be performed more efficiently by reporting a plurality of CRIs through CSI reporting, and up to 128 ports may be accurately utilized based on CSI reporting, thereby improving system throughput.

In addition to the effect described above, other effects may be inferred from the description below.

### BRIEF DESCRIPTION OF THE DRAWINGS

FIG. 1 illustrates physical channels used in a 3rd generation partnership project (3GPP) system as an exemplary wireless communication system, and a general signal transmission method using the same.
FIG. 2 illustrates a radio frame structure.
FIG. 3 illustrates a resource grid of a slot.
FIG. 4 illustrates exemplary mapping of physical channels in a slot.
FIG. 5 illustrates an exemplary PDSCH and acknowledgment/negative acknowledgment (ACK/NACK) transmission process.
FIG. 6 illustrates an exemplary PUSCH transmission process.
FIG. 7 illustrates an example of a channel state information (CSI) related procedure.
FIG. 8 illustrates an antenna configuration and a port configuration within a panel.
FIG. 9 is a diagram for explaining a structure of the enhanced Type II codebook.
FIG. 10 is a diagram for explaining a method of performing CSI reporting for a plurality of CSI-RS resources according to an embodiment.
FIG. 11 is a diagram for explaining a method for a UE to report CSI to a network according to an embodiment.
FIG. 12 is a flowchart of a method performed by a UE according to an embodiment.
FIG. 13 is a flowchart of a method performed by a BS according to an embodiment.
FIGS. 14 to 17 are diagrams illustrating an example of a communication system 1 and wireless devices applicable to the present disclosure.

### DETAILED DESCRIPTION

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In the present disclosure, for simplicity, this technology will be referred to as NR (New Radio or New RAT).

For the sake of clarity, 3GPP NR is mainly described, but the technical idea of the present disclosure is not limited thereto.

In the present disclosure, the term "set/setting" may be replaced with "configure/configuration", and both may be used interchangeably. Further, a conditional expression (e.g., "if", "in a case", or "when") may be replaced by "based on that" or "in a state/status". In addition, an operation or software/hardware (SW/HW) configuration of a user equipment (UE)/base station (BS) may be derived/understood based on satisfaction of a corresponding condition. When a process on a receiving (or transmitting) side may be derived/understood from a process on the transmitting (or receiving) side in signal transmission/reception between wireless communication devices (e.g., a BS and a UE), its description may be omitted. Signal determination/generation/encoding/transmission of the transmitting side, for example, may be understood as signal monitoring reception/decoding/determination of the receiving side. Further, when it is said that a UE performs (or does not perform) a specific operation, this may also be interpreted as that a BS expects/assumes (or does not expect/assume) that the UE performs the specific operation. When it is said that a BS performs (or does not perform) a specific operation, this may also be interpreted as that a UE expects/assumes (or does not expect/assume) that the BS performs the specific operation. In the following description, sections, embodiments, examples, options, methods, schemes, and so on are distinguished from each other and indexed, for convenience of description, which does not mean that each of them necessarily constitutes an independent invention or that each of them should be implemented only individually. Unless explicitly contradicting each other, it may be derived/understood that at least some of the sections, embodiments, examples, options, methods, schemes, and so on may be implemented in combination or may be omitted.

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

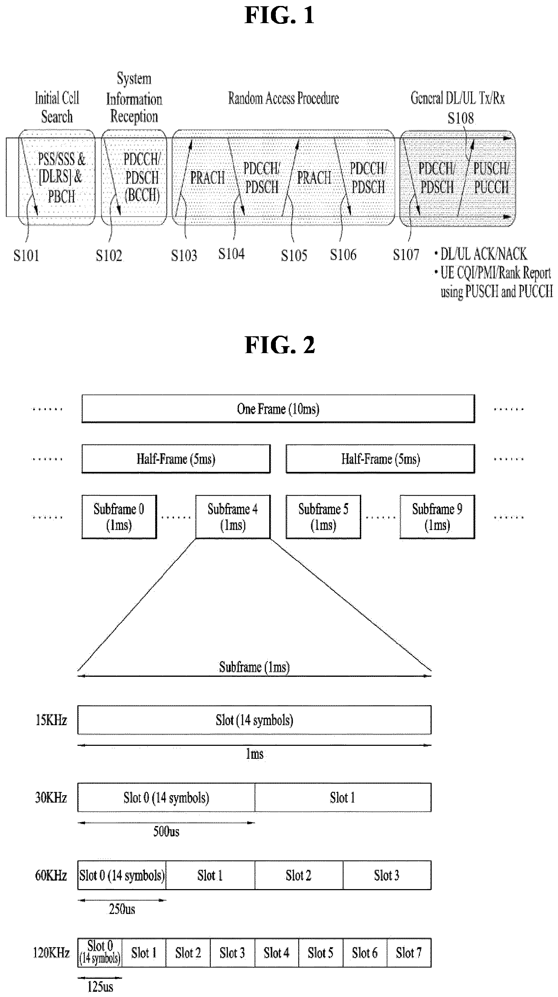

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

**[Table 1]**

| SCS (15*2^{u}) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

| | | | |
|---|---|---|---|
| N ^{slot}_{symb}: Number of symbols in a slot N ^{frame,u}ₛₗₒₜ: Number of slots in a frame N ^{subframe,u}ₛₗₒₜ: Number of slots in a subframe | | | |

Table 2 illustrates that the number of symbols per slot, the number of slots per frame, and the number of slots per subframe vary according to the SCS when the extended CP is used.

**[Table 2]**

| SCS (15*2^{u}) | N^{slot}_{symb} | N^{frame,u}ₛₗₒₜ | N^{subframe,u}ₛₗₒₜ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

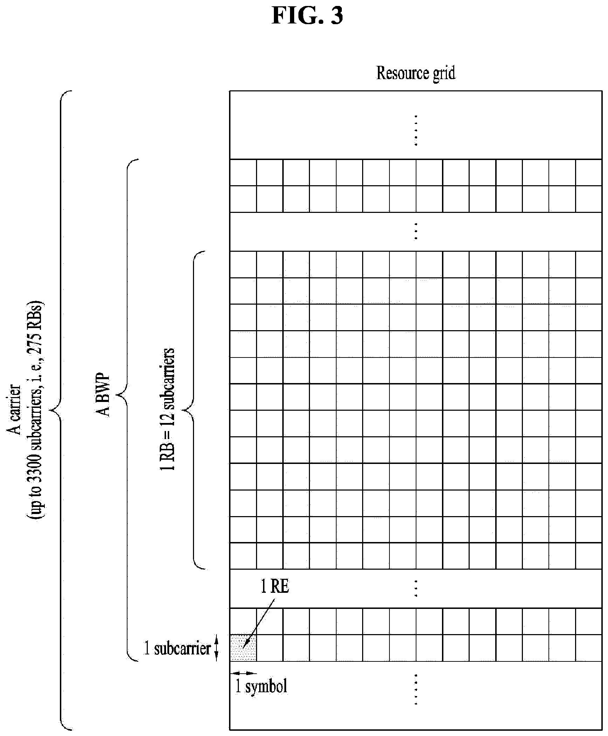

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

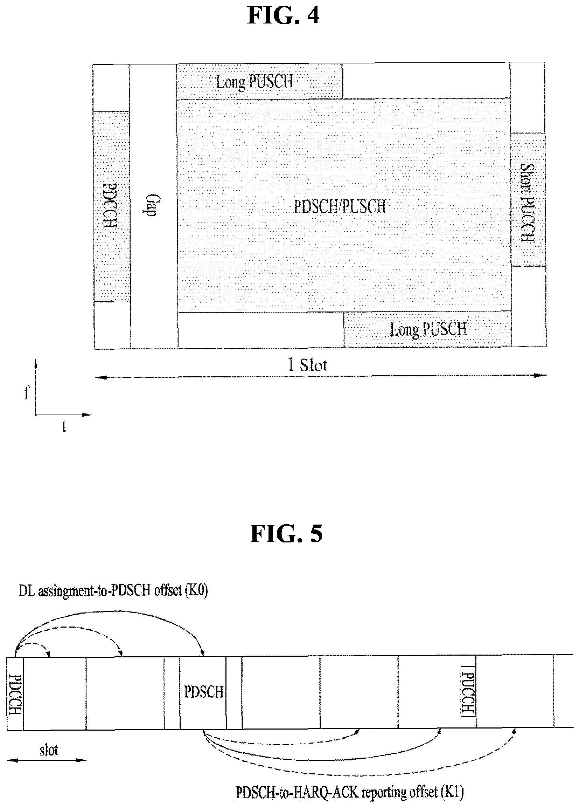

FIG. 4 illustrates exemplary mapping of physical channels in a slot. A PDCCH may be transmitted in a DL control region, and a PDSCH may be transmitted in a DL data region. A PUCCH may be transmitted in a UL control region, and a PUSCH may be transmitted in a UL data region. A guard period (GP) provides a time gap for transmission mode-to-reception mode switching or reception mode-to-transmission mode switching at a BS and a UE. Some symbol at the time of DL-to-UL switching in a subframe may be configured as a GP.

Each physical channel will be described below in greater detail.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g., a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH includes 1, 2, 4, 8, or 16 control channel elements (CCEs) according to its aggregation level (AL). A CCE is a logical allocation unit used to provide a PDCCH with a specific code rate according to a radio channel state. A CCE includes 6 resource element groups (REGs), each REG being defined by one OFDM symbol by one (P)RB. The PDCCH is transmitted in a control resource set (CORESET). A CORESET is defined as a set of REGs with a given numerology (e.g., an SCS, a CP length, and so on). A plurality of CORESETs for one UE may overlap with each other in the time/frequency domain. A CORESET may be configured by system information (e.g., a master information block (MIB)) or UE-specific higher-layer signaling (e.g., radio resource control (RRC) signaling). Specifically, the number of RBs and the number of symbols (3 at maximum) in the CORESET may be configured through higher-layer signaling.

For PDCCH reception/detection, the UE monitors PDCCH candidates. A PDCCH candidate is CCE(s) that the UE should monitor to detect a PDCCH. Each PDCCH candidate is defined as 1, 2, 4, 8, or 16 CCEs according to an AL. The monitoring includes (blind) decoding PDCCH candidates. A set of PDCCH candidates decoded by the UE are defined as a PDCCH search space (SS). An SS may be a common search space (CSS) or a UE-specific search space (USS). The UE may obtain DCI by monitoring PDCCH candidates in one or more SSs configured by an MIB or higher-layer signaling. Each CORESET is associated with one or more SSs, and each SS is associated with one CORESET. An SS may be defined based on the following parameters.

controlResourceSetId: A CORESET related to an SS.

monitoringSlotPeriodicityAndOffset: A PDCCH monitoring periodicity (in slots) and a PDCCH monitoring offset (in slots).

monitoringSymbolsWithinSlot: PDCCH monitoring symbols in a slot (e.g., the first symbol(s) of a CORESET).

nrofCandidates: The number of PDCCH candidates (one of 0, 1, 2, 3, 4, 5, 6, and 8) for each AL={1, 2, 4, 8, 16}.

An occasion (e.g., time/frequency resources) in which the UE is to monitor PDCCH candidates is defined as a PDCCH (monitoring) occasion. One or more PDCCH (monitoring) occasions may be configured in a slot.

Table 3 shows the characteristics of each SS.

**[Table 3]**

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| UE Specific | UE Specific | C-RNTI, or MCS-C-RNTI, or CS-RNTI(s) | User specific PDSCH decoding |

Table 4 shows DCI formats transmitted on the PDCCH.

**[Table 4]**

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

The PDSCH conveys DL data (e.g., DL-shared channel transport block (DL-SCH TB)) and uses a modulation scheme such as quadrature phase shift keying (QPSK), 16-ary quadrature amplitude modulation (16QAM), 64QAM, or 256QAM. A TB is encoded into a codeword. The PDSCH may deliver up to two codewords. Scrambling and modulation mapping may be performed on a codeword basis, and modulation symbols generated from each codeword may be mapped to one or more layers. Each layer together with a demodulation reference signal (DMRS) is mapped to resources, and an OFDM symbol signal is generated from the mapped layer with the DMRS and transmitted through a corresponding antenna port.

The PUCCH delivers uplink control information (UCI). The UCI includes the following information.

SR (Scheduling Request): Information used to request UL-SCH resources.

HARQ (Hybrid Automatic Repeat reQuest)-ACK (Acknowledgement): A response to a DL data packet (e.g., codeword) on the PDSCH. An HARQ-ACK indicates whether the DL data packet has been successfully received. In response to a single codeword, a 1-bit of HARQ-ACK may be transmitted. In response to two codewords, a 2-bit HARQ-ACK may be transmitted. The HARQ-ACK response includes positive ACK (simply, ACK), negative ACK (NACK), discontinuous transmission (DTX) or NACK/DTX. The term HARQ-ACK is interchangeably used with HARQ ACK/NACK and ACK/NACK.

CSI (Channel State Information): Feedback information for a DL channel. Multiple input multiple output (MIMO)-related feedback information includes an RI and a PMI.

Table 5 illustrates exemplary PUCCH formats. PUCCH formats may be divided into short PUCCHs (Formats 0 and 2) and long PUCCHs (Formats 1, 3, and 4) based on PUCCH transmission durations.

**[Table 5]**

| PUCCH format | Length in OFDM symbols ${N}_{symb}^{PUCCI}$ | Number of bits | Usage | Etc |
|---|---|---|---|---|
| 0 | 1 - 2 | ≤2 | HARQ, SR | Sequence selection |
| 1 | 4 - 14 | ≤2 | HARQ, [SR] | Sequence modulation |
| 2 | 1 - 2 | >2 | HARQ, CSI, [SR] | CP-OFDM |
| 3 | 4 - 14 | >2 | HARQ, CSI, [SR] | DFT-s-OFDM (no UE multiplexing) |
| 4 | 4 - 14 | >2 | HARQ, CSI, [SR] | DFT-s-OFDM (Pre DFT OCC) |

PUCCH format 0 conveys UCI of up to 2 bits and is mapped in a sequence-based manner, for transmission. Specifically, the UE transmits specific UCI to the BS by transmitting one of a plurality of sequences on a PUCCH of PUCCH format 0. Only when the UE transmits a positive SR, the UE transmits the PUCCH of PUCCH format 0 in PUCCH resources for a corresponding SR configuration.

PUCCH format 1 conveys UCI of up to 2 bits and modulation symbols of the UCI are spread with an orthogonal cover code (OCC) (which is configured differently whether frequency hopping is performed) in the time domain. The DMRS is transmitted in a symbol in which a modulation symbol is not transmitted (i.e., transmitted in time division multiplexing (TDM)).

PUCCH format 2 conveys UCI of more than 2 bits and modulation symbols of the DCI are transmitted in frequency division multiplexing (FDM) with the DMRS. The DMRS is located in symbols #1, #4, #7, and #10 of a given RB with a density of 1/3. A pseudo noise (PN) sequence is used for a DMRS sequence. For 2-symbol PUCCH format 2, frequency hopping may be activated.

PUCCH format 3 does not support UE multiplexing in the same PRBS, and conveys UCI of more than 2 bits. In other words, PUCCH resources of PUCCH format 3 do not include an OCC. Modulation symbols are transmitted in TDM with the DMRS.

PUCCH format 4 supports multiplexing of up to 4 UEs in the same PRBS, and conveys UCI of more than 2 bits. In other words, PUCCH resources of PUCCH format 3 include an OCC. Modulation symbols are transmitted in TDM with the DMRS.

At least one of one or two or more cells configured to the UE may be configured for PUCCH transmission. At least a primary cell may be set as a cell for the PUCCH transmission. At least one PUCCH cell group may be configured to the UE based on at least one cell where the PUCCH transmission is configured, and each PUCCH cell group includes one or two or more cells. A PUCCH cell group may be simply referred to as a PUCCH group. The PUCCH transmission may be configured not only in the primary cell but also in a secondary cell (Scell). The primary cell belongs to a primary PUCCH group, and the PUCCH-SCell where the PUCCH transmission is configured belongs to a secondary PUCCH group. For cells belonging to the primary PUCCH group, a PUCCH on the primary cell may be used. For cells belonging to the secondary PUCCH group, a PUCCH on the PUCCH-SCell may be used.

The PUSCH delivers UL data (e.g., UL-shared channel transport block (UL-SCH TB)) and/or UCI based on a CP-OFDM waveform or a DFT-s-OFDM waveform. When the PUSCH is transmitted in the DFT-s-OFDM waveform, the UE transmits the PUSCH by transform precoding. For example, when transform precoding is impossible (e.g., disabled), the UE may transmit the PUSCH in the CP-OFDM waveform, while when transform precoding is possible (e.g., enabled), the UE may transmit the PUSCH in the CP-OFDM or DFT-s-OFDM waveform. A PUSCH transmission may be dynamically scheduled by a UL grant in DCI, or semi-statically scheduled by higher-layer (e.g., RRC) signaling (and/or Layer 1 (L1) signaling such as a PDCCH) (configured scheduling or configured grant). The PUSCH transmission may be performed in a codebook-based or non-codebook-based manner.

FIG. 5 illustrates an exemplary ACK/NACK transmission process. Referring to FIG. 5, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 and DCI format 1_1 may include the following information.

Frequency domain resource assignment: Indicates an RB set assigned to a PDSCH.

Time domain resource assignment: Indicates K0 and the starting position (e.g., OFDM symbol index) and length (e.g., the number of OFDM symbols) of the PDSCH in a slot
PDSCH-to-HARQ_feedback timing indicator: Indicates K1.

HARQ process number (4 bits): Indicates the HARQ process ID of data (e.g., a PDSCH or TB).

PUCCH resource indicator (PRI): Indicates a PUCCH resource to be used for UCI transmission among a plurality of PUCCH resources in a PUCCH resource set.

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the present disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in two bits if spatial bundling is not configured and in one bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter *maxNrofCodeWordsScheduledByDCI* indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bitwise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

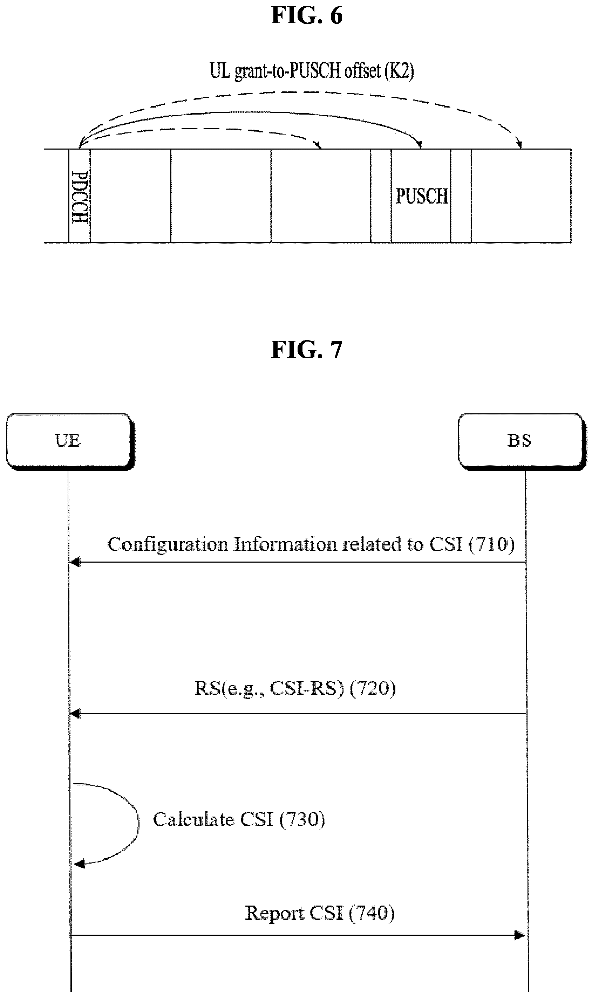

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). DCI format 1_0 or 1_1 may include the following information.

Frequency domain resource assignment: Indicates an RB set assigned to the PUSCH.

Time domain resource assignment: Indicates a slot offset K2 and the starting position (e.g., OFDM symbol index) and duration (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

### CSI related operation

FIG. 7 shows an example of a CSI related procedure.

The UE receives configuration information related to CSI from the BS via RRC signaling (710). The CSI-related configuration information may include at least one of channel state information-interference measurement (CSI-IM)-related information, CSI measurement-related information, CSI resource configuration-related information, CSI-RS resource-related information, or CSI report configuration-related information.
- A CSI-IM resource may be configured for interference measurement (IM) of the UE. In the time domain, the CSI-IM resource set may be configured periodic, semi-persistent, or aperiodic. The CSI-IM resource may be configured to zero power (ZP)-CSI-RS for the UE. ZP-CSI-RS may be configured to be distinguished from non-zero power (NZP)-CSI-RS.
- The UE may assume that CSI-RS resource(s) for channel measurement configured for one CSI reporting and CSI-IM/NZP CSI-RS resource(s) for interference measurement have a QCL relationship with respect to 'QCL-TypeD' for each resource (when NZP CSI-RS resource(s) are used for interference measurement).
- CSI resource configuration may include at least one of a CSI-IM resource for interference measurement, an NZP CSI-RS resource for interference measurement, and an NZP CSI-RS resource for channel measurement. The channel measurement resource (CMR) may be a NZP CSI-RS for CSI acquisition, and the interference measurement resource (IMR) may be an NZP CSI-RS for CSI-IM and IM.
- A CSI-RS may be configured for one or more UEs. Different CSI-RS configurations may be provided for each UE, or the same CSI-RS configuration may be provided to a plurality of UEs. The CSI-RS may support up to 32 antenna ports. CSI-RSs corresponding to N (N being 1 or more) antenna ports may be mapped to N RE locations within a time-frequency unit corresponding to one slot and one RB. When N is 2 or more, N-port CSI-RSs may be multiplexed in CDM, FDM and/or TDM methods. The CSI-RS may be mapped to the remaining REs except for REs to which CORESET, DMRS, and SSB are mapped. In the frequency domain, the CSI-RS may be configured for the entire bandwidth, a partial bandwidth part (BWP), or a partial bandwidth. The CSI-RS may be transmitted in each RB within the bandwidth in which the CSI-RS is configured (i.e., density = 1), or the CSI-RS may be transmitted in every second RB (e.g., even or odd RB) (i.e., density = 1/2). When the CSI-RS is used as a tracking reference signal (TRS), a single-port CSI-RS may be mapped on three subcarriers in each resource block (i.e., density = 3). One or more CSI-RS resource sets may be configured for the UE in the time domain. Each CSI-RS resource set may include one or more CSI-RS configurations. Each CSI-RS resource set may be configured periodic, semi-persistent, or aperiodic.
- The CSI report configuration may include configuration for a feedback type, a measurement resource, a report type, and the like. The NZP-CSI-RS resource set may be used for CSI reporting configuration of a corresponding UE. An NZP-CSI-RS resource set may be associated with the CSI-RS or the SSB. A plurality of periodic NZP-CSI-RS resource sets may be configured as TRS resource sets. (i) The feedback types include a channel quality indicator (CQI), a precoding matrix indicator (PMI), a CSI-RS resource indicator (CRI), an SSB resource block indicator (SSBRI), a layer indicator (LI), a rank indicator (RI), a first layer (L1)-reference signal received strength (RSRP), and the like. (ii) The measurement resource may include configuration for a downlink signal and/or downlink resource on which measurement is performed by the UE to determine feedback information. The measurement resource may be configured as a ZP and/or NZP CSI-RS resource set associated with the CSI report configuration. The NZP CSI-RS resource set may include a CSI-RS set or an SSB set. For example, the L1-RSRP may be measured for a CSI-RS set or for an SSB set. (iii) The report type may include configuration for a time when the UE performs a report and an uplink channel. The reporting time may be configured to be periodic, semi-persistent or aperiodic. The periodic CSI report may be transmitted on a PUCCH. The semi-persistent CSI report may be transmitted on a PUCCH or a PUSCH based on a MAC CE indicating activation/deactivation. The aperiodic CSI report may be indicated by DCI signaling. For example, a CSI request field of an uplink grant may indicate one of various report trigger sizes. The aperiodic CSI report may be transmitted on a PUSCH.

The UE measures CSI based on configuration information related to CSI. The CSI measurement may include receiving the CSI-RS (720) and acquiring the CSI by computing the received CSI-RS (730).

The UE may transmit a CSI report to the BS (740). For the CSI report, the time and frequency resource available to the UE are controlled by the BS. Channel state information (CSI) includes at least one of a channel quality indicator (CQI), a precoding matrix indicator (PMI), a CSI-RS resource indicator (CRI), a SS/PBCH block resource indicator (SSBRI), a layer indicator (LI), a rank indicator (RI), an L1-RSRP, and/or an L-SINR.

A time domain behavior of CSI reporting supports periodic, semi-persistent, aperiodic. i) Periodic CSI reporting is performed in a short PUCCH, a long PUCCH. Periodicity and a slot offset of periodic CSI reporting may be configured by RRC and refers to a CSI-ReportConfig IE. ii) SP (semi-periodic) CSI reporting is performed in a short PUCCH, a long PUCCH, or a PUSCH. For SP CSI in a short/long PUCCH, periodicity and a slot offset are configured by RRC and a CSI report is activated/deactivated by separate MAC CE/DCI. For SP CSI in a PUSCH, periodicity of SP CSI reporting is configured by RRC, but a slot offset is not configured by RRC and SP CSI reporting is activated/deactivated by DCI (format 0_1). For SP CSI reporting in a PUSCH, a separated RNTI (SP-CSI C-RNTI) is used. An initial CSI report timing follows a PUSCH time domain allocation value indicated by DCI and a subsequent CSI report timing follows a periodicity configured by RRC. DCI format 0_1 may include a CSI request field and activate/deactivate a specific configured SP-CSI trigger state. SP CSI reporting has activation/deactivation equal or similar to a mechanism having data transmission in a SPS PUSCH. iii) Aperiodic CSI reporting is performed in a PUSCH and is triggered by DCI. In this case, information related to trigger of aperiodic CSI reporting may be delivered/indicated/configured through MAC-CE. For AP CSI having an AP CSI-RS, AP CSI-RS timing is configured by RRC and timing for AP CSI reporting is dynamically controlled by DCI.

A CSI codebook defined in the NR standard (e.g., PMI codebook) may be broadly divided into Type I codebook and Type II codebook. The Type I codebook mainly targets single user (SU)-MIMO that supports both high-order and low-order. The Type II codebook may mainly support MI-MIMO that supports up to 2 layers. Compared to the Type I codebook, the Type II codebook may provide more accurate CSI, but signaling overhead may increase. An Enhanced Type II codebook is introduced to address a disadvantage in terms of CSI overhead of the existing Type II codebook by reducing a payload of the codebook in consideration of a correlation of a frequency axis.

A CSI report via a PUSCH may be set to Part 1 and Part 2. The Part 1 has a fixed payload size and is used to identify the number of information bits in Part 2. The Part 1 may be entirely transmitted before Part 2.
- For Type I CSI feedback, the Part 1 includes RI (if reported), CRI (if reported), and CQI of a first code word. The Part 2 includes PMI, and when RI > 4, the Part 2 includes CQI.
- For Type II CSI feedback, the Part 1 includes RI (if reported), CQI, and an indication of the number of non-zero WB amplitude coefficients per layer of Type II CSI. The Part 2 includes the PMI of Type II CSI.
- For Enhanced Type II CSI feedback, the Part 1 includes RI (if reported), CQI, and an indication of the total number of non-zero WB amplitude coefficients for all layers of Enhanced Type II CSI. The Part 2 includes the PMI of Enhanced Type II CSI.

If a CSI report on a PUSCH includes two parts and a CSI payload to be reported is less than a payload size provided by a PUSCH resource allocated for the CSI report, the UE may omit a part of Part 2 CSI.

A semi-persistent CSI report performed in PUCCH format 3 or 4 supports Type II CSI feedback, but only Part 1 of Type II CSI feedback.

### Quasi-co location (QCL)

When the channel property of an antenna port is to be inferred from a channel of another antenna port, the two antenna ports are quasi co-located. The channel property may include one or more of delay spread, Doppler spread, frequency/Doppler shift, average received power, received Timing/average delay, and a spatial RX parameter.

A list of a plurality of transmission configuration indicator (TCI) state configurations may be configured in the UE through a higher layer parameter PDSCH-Config. Each TCI state is linked to a QCL configuration parameter between one or two DL reference signals and the DM-RS port of a PDSCH. The QCL may include qcl-Type1 for a first DL RS and qcl-Type2 for a second DL RS. The QCL type may correspond to one of the following.
- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

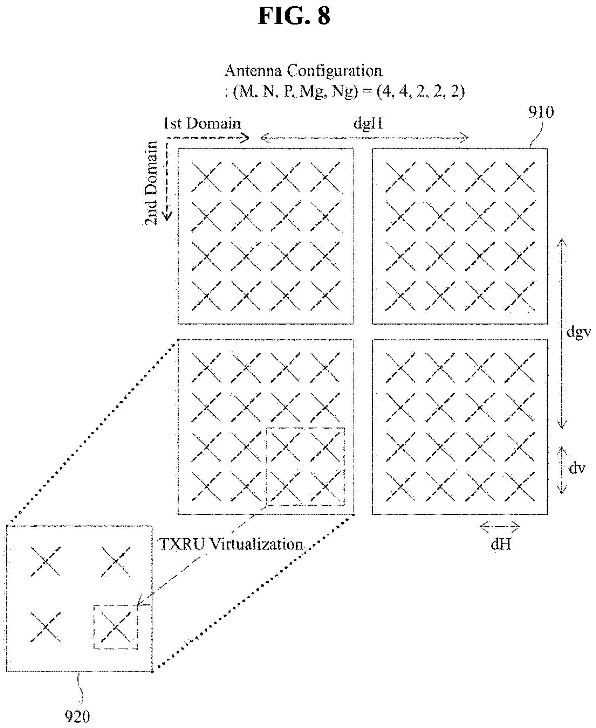

FIG. 8 illustrates an antenna configuration and a port configuration within a panel.

Referring to FIG. 8, an antenna configuration 910 may be configured for a first domain and a second domain, and transmit-receive unit (TXRU) virtualization may be applied to a relationship between the antenna configuration 910 and a port configuration 920.

Regarding the antenna configuration 910, M represents the number of columns in the panel (i.e., the number of antenna ports in the first domain within the panel), N represents the number of rows in the panel (i.e., the number of antenna ports in the second domain within the panel), P represents the polarization (1: co-pol, 2: X-pol), Mg represents the number of panels in the first domain, and Ng represents the number of panels in the second domain. Accordingly, the total number of antenna elements may be expressed as P*M*N*Mg*Ng.

For example, the antenna configuration 910 shown in FIG. 8 corresponds to [(M, N, P, Mg, Ng) = (4, 4, 2, 2, 2)]. In FIG. 8, dgH represents a panel spacing in the first domain, dgV represents a channel spacing in the second domain, dH represents an antenna spacing in the first domain, and dV represents an antenna spacing in the second domain.

Regarding the panel configuration 920, N1 represents the number of columns in the first domain (i.e., the number of antenna ports in the first domain within the panel), N2 represents the number of rows in the second domain (i.e., the number of antenna ports in the second domain within the panel), and P represents the polarization (1: co-pol, 2: X-pol). Accordingly, the total number of CSI-RS ports in the panel may be expressed as P*N1*N2. For example, the panel configuration 920 shown in FIG. 8 corresponds to [(N1, N2, P) = (2, 2, 2)].

### CSI Codebook

A CSI codebook defined in the NR standard (e.g., precoding matrix indicator (PMI) codebook) may be broadly classified into Type I and Type II codebooks. For a better understanding of the codebook, Section 5.2.2.2 of TS 38.214 may be referenced (incorporated by reference).

### (1) Type I Codebook

The Type I codebook is primarily targeted at SU-MIMO (Single User MIMO) that supports both high and low orders. The Type I codebook may be divided into (i) single-panel codebooks and (ii) multi-panel codebooks. (i) The single-panel codebook may be based on the assumption that the UE receives DL transmission via a single antenna panel. (ii) The multi-panel codebook may support a BS configuration that uses multiple (e.g., 2 or 4) antenna panels. Unlike the single-panel codebook which supports ranks from 1 to 8, the multi-panel codebook may support ranks from 1 to 4.

The Type I codebook may be configured in terms of the selection of preferred discrete Fourier transform (DFT) vector(s) from an oversampled DFT vector set, which serves as the basis for the spatial domain (SD), and the indication of co-phase for the cross-polarization of BS antennas.

For example, a codebook vector for 1-layer transmission on a one-dimensional (1D) array antenna may be defined based on Equation 1. [Equation 1] $W \left(l\right) = \frac{1}{\sqrt{N}} \left[\begin{matrix}1 \\ {e}^{j \frac{2 π l}{ON}} \\ {e}^{j \frac{2 π l ∗ 2}{ON}} \\ … \\ {e}^{j \frac{2 π l ∗ \left(N-1\right)}{ON}}\end{matrix}\right]$

In Equation 1, N represents the number of antenna elements in the 1D antenna array, and O represents an oversampling factor. The index of the codebook vector, l may be l = 0, 1, 2, ..., O*N-1.

A precoder vector for a 2D antenna array may be defined based on the Kronecker product of two 1D array precoder vectors.

### (2) Type II Codebook

The Type II codebook primarily supports MU-MIMO (Multi-User MIMO) which supports up to two layers. Compared to the Type I codebook, the Type II codebook may provide more accurate CSI but may cause an increase in signaling overhead. In the Type II codebook, a PMI may identify a set of beams and a set of amplitude coefficients. The amplitude coefficients may be used to generate a weighted sum of beams. The Type II codebook may also identify the phase shift for co-phasing between beams. The Type II codebook for port selection may support reporting of wideband/long-term CSI (e.g., i1) and subband/short-term CSI (e.g., i2) based on a precoded (or beamformed) CSI-RS when the BS knows a channel between the UE and the BS.

In the case of the Type II codebook, multiple DFT vectors, which serve as the SD basis, are selected and linearly combined to achieve high resolution and superior MU-MIMO performance.

An enhanced Type II codebook has been introduced to address CSI overhead limitations of the conventional Type II codebook. The enhanced Type II codebook reduces the payload of the codebook by considering the correlation in the frequency domain.

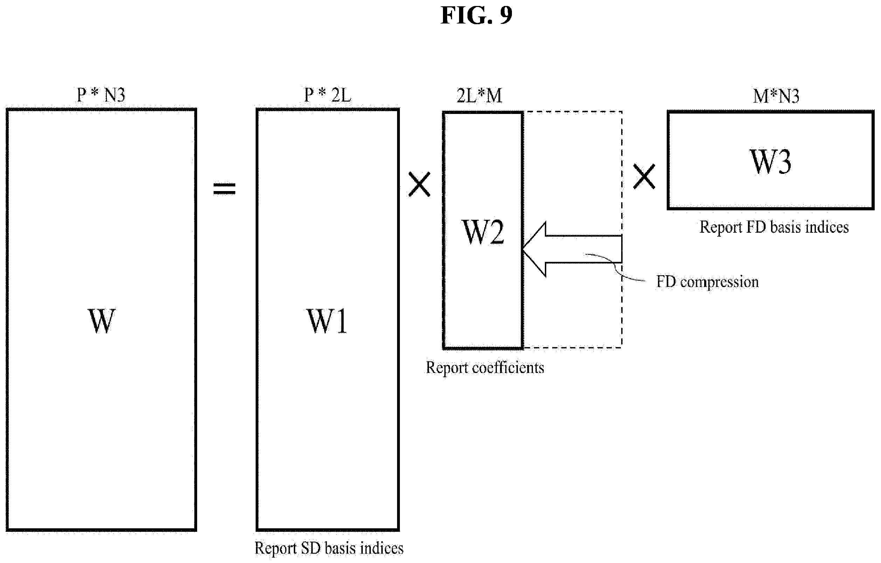

FIG. 9 is a diagram for explaining a structure of the enhanced Type II codebook.

Referring to FIG. 9, in the enhanced Type II codebook, a precoding matrix W may be expressed as W = W1*W2*W3. W1 corresponds to an SD basis related to SD compression, W3 corresponds to an FD basis related to FD compression, and W2 corresponds to linear combining (LC) coefficients according to the FD compression of W3. When the UE determines matrix W as the PMI of enhanced Type II, the UE reports indices of W1, coefficients of W2, and indices of W3 to a network. A dimension of matrix W is P(=2N1*N2)*N3, W1 is P*2L, W2 is 2L*M, and W3 is N3*M. The UE selects 2L basis beam vectors with respect to W1, M LC coefficients with respect to W2, and M FD basis vectors with respect to W3 (in this case, each vector is an orthogonal DFT vector of size N3*1). L may be a parameter for SD compression, which may be the number of SD beams and may be 2, 3, or 6. N3 and M may be parameters for FD compression, N3 may be a DFT size for FD compression and expressed as N3=N_{SB}*R, and R may be a granularity between CQI and PMI, which may be 1 or 2. M may be the number of FD compression units and expressed as M = ceiling (p*(N3/R)). A (L, p, β) parameter combinations (paramCombination-r16) that defines enhanced Type II is shown in Table 6.

**[Table 6]**

| *paramCombination-r16* | L | Pᵥ | | β |
|---|---|---|---|---|
| | | υ ∈ {1,2} | υ ∈ {3,4} | |
| 1 | 2 | 1/4 | 1/8 | 1/4 |
| 2 | 2 | 1/4 | 1/8 | 1/2 |
| 3 | 4 | 1/4 | 1/8 | 1/4 |
| 4 | 4 | 1/4 | 1/8 | 1/2 |
| 5 | 4 | 1/4 | 1/4 | 3/4 |
| 6 | 4 | 1/2 | 1/4 | 1/2 |

In Table 6, v corresponds to RI, and β is a parameter related to an upper limit of LC coefficients selected by the UE.

An enhanced Type II codebook vector that constitutes a specific l-th layer may be expressed as shown in Equation 2. [Equation 2] $\begin{matrix}{W}_{{q}_{1} , {q}_{2} , {n}_{1} , {n}_{2} , {n}_{3} , l , {p}_{l}^{\left(1\right)} , {p}_{l}^{\left(2\right)} , {i}_{2 , 5 , l} , t}^{l} = \frac{1}{\sqrt{{N}_{1} {N}_{2} {γ}_{t , l}}} \left[\begin{matrix}{\sum }_{i = 0}^{L - 1} {v}_{{m}_{1}^{\left(i\right)} , {m}_{2}^{\left(i\right)}} {p}_{l , 0}^{\left(1\right)} {\sum }_{f = 0}^{{M}_{υ} - 1} {y}_{t , l}^{\left(f\right)} {p}_{l , i , f}^{\left(2\right)} {φ}_{l , i , f} \\ {\sum }_{i = 0}^{L - 1} {v}_{{m}_{1}^{\left(i\right)} , {m}_{2}^{\left(i\right)}} {p}_{l , 1}^{\left(1\right)} {\sum }_{f = 0}^{{M}_{υ} - 1} {y}_{t , l}^{\left(f\right)} {p}_{l , i + L , f}^{\left(2\right)} {φ}_{l , i + L , f}\end{matrix}\right] \\ {γ}_{t , l} = {\sum }_{i = 0}^{2 L - 1} {\left({p}_{l , \left|\frac{i}{L}\right|}^{\left(1\right)}\right)}^{2} {\left|{\sum }_{f = 0}^{{M}_{υ} - 1} {y}_{t , l}^{\left(f\right)} {p}_{l , i , f}^{\left(2\right)} {φ}_{l , i , f}\right|}^{2}\end{matrix}$

In Equation 2, l is defined as *l*=1, 2 ,3, 4 and N1 and N2 represent the lengths of first and second SDs for each BS (or each port group). The term vₘ₁(i)_{, m2}(j) (where i = 0, 1, ..., L-1) refer to L SD DFT vectors selected for linear combining (for example, the term vₘ₁(i)_{, m2}(j) may be a 1D DFT vector or 2D DFT vector, depending on the antenna configuration of each BS). The codebook vector is determined by the parameters q₁, q₂, n₁, n₂, which corresponds to the parameters introduced to select optimal L beams out of a total of Q1*N1*Q2*N2 beams (where Q1 and Q2 are oversampling factors for the first and second domains, respectively). In addition, n₃ is a parameter introduced to select the frequency domain (FD) DFT basis, and pₗ⁽¹⁾ and pₗ⁽²⁾ correspond to amplitude coefficients. Moreover, pₗ⁽¹⁾ is an indicator with a 4-bit quantization level that indicates a relative amplitude based on the largest value (based on the polarization that contains the strongest coefficient) among the strongest coefficients (p_ref) per polarization for each layer. It uses 4 bits to indicate the relative amplitude, pₗ⁽²⁾ is an indicator that represents a relative amplitude with three bits, based on **p_ref** within each polarization. The four-bit phase coefficient indicator is i_{,2,5,l}, which is associated with φ_{l,i,f}. Further, t represents a frequency domain index (t = 0, ..., N3-1) (for example, a PRB or a group of subbands), which may correspond to each element of an FD basis vector y_{t,l}^{(f)}, which is an N3-length DFT vector.

### CSI report based on a plurality of CSI-RSs/CRIs

In the following description, channel measurement resource (CMR) may include CSI-RS resources (e.g., non-zero power CSI-RS) configured for channel measurement. An interference measurement resource (IMR) may include a CSI-RS resource set for interference measurement (e.g., zero/non-zero power CSI-RS).

In Rel-19 NR MIMO or later standards, CSI supporting up to 128 CSI-RS ports in FR1 may be considered to increase system throughput of DL/UL and for more flexible MIMO operation.
a. Type-I codebook refinement supporting up to a total of 128 CSI-RS ports across all resources, assuming legacy CSI-RS resources (with up to 32 CSI-RS ports per resource), based on extension of legacy codebooks.
b. Type-II codebook refinement supporting up to a total of 128 CSI-RS ports across all resources, assuming legacy CSI-RS resources (with up to 32 CSI-RS ports per resource), based on extension of legacy codebooks, without modifying any codebook parameter other than introducing additional values for the number of ports codebook parameter(s).
c. Extension of CRI(s)-based CSI reporting (CQI/PMI/RI calculated per CRI for ≥ 1 CRIs) for hybrid beamforming supporting up to a total of 128 CSI-RS ports across all resources, with up to 32 CSI-RS ports per resource, without new codebook design.

In relation to the above, TS 38.214 has the following restrictions on the number of CSI-RS resources and CSI-RS ports, as shown in Table 7.

**[Table 7]**

| |
|---|
| Except for a CSI-ReportConfig configured with reportQuantity set to 'cri-RI-PMI-CQI' and codebookType set to 'typeII-CJT-r18', 'typeII-CJT-PortSelection-r18', 'typeII-Doppler-r18', or 'typeII-Doppler-PortSelection-r18', if the UE is configured with a CSI-ReportConfig with the higher layer parameter reportQuantity set to 'cri-RSRP', 'cri-RI-PMI-CQI ', 'cri-RI-il', 'cri-RI-il-CQI', 'cri-RI-CQI', 'cri-RI-LI-PMI-CQI', 'cri-SINR', or 'cri-SINR- Index ', and Ks>1 resources are configured in the corresponding resource set for channel measurement, then the UE shall derive the CSI parameters other than CRI conditioned on the reported CRI, where CRI k(k≥0) corresponds to the configured (k+1)-th entry of associated nzp-CSI-RS-Resources in the corresponding NZP-CSI-RS-ResourceSet for channel measurement, and (k+1)-th entry of associated csi-IM-Resource in the corresponding csi-IM-ResourceSet (if configured) or (k+1)-th entry of associated nzp-CSI-RS-Resources in the corresponding NZP-CSI-RS-ResourceSet (if configured for CSI-ReportConfig with reportQuantity set to 'cri-SINR' or 'cri-SINR- Index ') for interference measurement. If Ks=2 CSI-RS resources are configured, each resource shall contain at most 16 CSI-RS ports. If 2<Ks≤8 CSI-RS resources are configured, each resource shall contain at most 8 CSI-RS ports. |

The restrictions in Table 7 are to prevent the computational complexity of a UE from being excessively increased. According to an embodiment of the present disclosure, the restrictions may be relaxed as follows.

For a UE that support Release 19 multiple CRI reporting, the following CSI-RS port and CSI-RS resource restrictions may be applied.
- When 4 or fewer CSI-RS resources are configured, each resource includes up to 32 CSI-RS ports.
- When more than 4 and 8 or fewer CSI-RS resources are configured, each resource includes up to 16 CSI-RS ports.

With regard to a multiple CSI report, the following CSI reporting and CMR/IMR configuration methods are supported in the existing NR standard.
1) STRP: single CRI reporting (CRI/CQI/RI/PMI/LI)
2) NCTT (Rel-17):
   i) CMR/IMR configuration
      a. M1 and M2 CMR (for STRP) for 1st and 2nd groups
      b. N CMR pair for NCJT
      c. M1+M2+N CSI-IMs (ZP CSI-RS only)
   ii) Reporting option
      a. Option 1:
         X STRP CSI (CRI/PMI/RI/LI/CQI)
         1 NCJT CSI (CRI - preferred CMR pair, CQI + (RI1, PMIl), (RI2, PMI2))
      b. Option 2:
         CRI for either CMR pair or CMR for STRP
         When CMR is NCJT: 1 NCJT CSI (CQI + (RI1, PMIl), (RI2, PMI2))
         When CMR is NCJT: CQI/RI/PMI/LI
3) CJT (Rel-18): Up to 4 TRPs through the same number of ports from one CSI-RS resource set (up to 128 ports/32 ports per resource)
   i) Only one NZP CSI-RS resource may be configured for interference measurement and only one CSI-IM resource may be configured regardless of an NTRP value.
   ii) Selection of N from among N_TRP(CMR) is included in CSI Part 1

In the present disclosure, performing of CSI reporting related to multiple CRIs is considered to increase a probability of MU pairing. In this case, if separate reporting is performed for each CRI, a payload may increase by the number of CSI-RSs, which may be the same as when each of a plurality of CSI reports is separately triggered, and thus there may not be a significant gain in terms of payload or resource allocation. Therefore, an effective CRI-based CSI reporting method to resolve these problems is proposed.

### Proposal 1

The UE may select L CSI-RS resources from among K CSI-RS resources and perform CSI reporting for the selected L CSI-RS resources. L and K are integers greater than or equal to 1, and L≤K. In this case, for CSI reporting, a CSI-RS resource indicator (CRI) may be determined/reported based on at least one of the following methods.
(1) Method 1: K CSI-RS resources may be configured within a CSI-RS resource set, reporting for L CSI-RS resources may be instructed/configured or agreed upon in advance via higher layer signaling (e.g., RRC, MAC-CE, or DCI), and the (best/preferred) CRI is reported to the BS as a combination of K choose L and a bit width thereof may be determined as in Equation 3.
   [Expression 3] $\left⌈{log}_{2} \left(\begin{matrix}K \\ L\end{matrix}\right)\right⌉$
   In Expression 3, () indicates a combination operation (KCL).
(2) Method 2: K CSI-RS resources are configured within a CSI-RS resource set, and the (max) number of CSI-RS resources L to be reported by the UE is indicated/configured via higher layer signaling (e.g., RRC, MAC-CE, or DCI) or agreed upon in advance, and based on the L values, the K resources are grouped into K₁, K₂, ..., K_{L} (K₁+K₂+... + K_{L} = K), and (best/preferred) CRI reporting is performed for each of the L groups. In this case, the (total) bit width of CRI may be determined as in Expression 4.
   [Expression 4] $\left⌈{log}_{2} {K}_{1}\right⌉ + \left⌈{log}_{2} {K}_{2}\right⌉ + \left⌈{log}_{2} {K}_{3}\right⌉ + … + \left⌈{log}_{2} {K}_{L}\right⌉$
(3) Method 3: K CSI-RS Resource is configured within a CSI-RS resource set, and L resources that are indicated/configured or agreed in advance to report L CSI-RS resources via higher layer signaling (e.g., RRC, MAC-CE, or DCI) is selected using K bit-map to report (best/preferred) CRI.
(4) Method 4: K CSI-RS resources are configured within a CSI-RS resource set, and reporting for L CSI-RS resources is indicated/configured or agreed upon in advance via higher layer signaling (e.g., RRC, MAC-CE, or DCI). In this case, M combinations of selecting L resources from among K resources are predefined or configured via a higher layer, and the UE reports one of the M combinations as the (best/preferred) CRI. In this case, the bit width of CRI may be Ceiling (log2M).
(5) Method 5: K CSI-RS resources may be configured within a CSI-RS resource set, and reporting for K CSI-RS resources may be indicated/configured or agreed upon in advance via higher layer signaling (e.g., RRC, MAC-CE, or DCI). In this case, reporting on CRI is not necessary, and therefore, the UE either does not have a CRI field (absent) or the BS disregards the field in the CSI report.
(6) Method 6: Method in which a BS pre-selects P (e.g. P=1 or 2) CSI-RS resources from among L CSI-RS resources to be reported by the UE and instructs the UE. In this case, the UE needs to select the remaining CSI-RS based on the L-P numbers excluding the P numbers. In other words, the UE selects L-P CSI-RS resources from the remaining K-P CSI-RS resources excluding P resources from the total K. Each of the L-P CRIs corresponding to the L-P CSI-RS resources may indicate which of the K-P CSI-RS resources the corresponding CSI-RS is. In other words, a first CRI from among L-P CRIs may include bits indicating one of the K-P CSI-RS resources, and a second CRI may include bits indicating another one of the K-P CSI-RS resources.

For example, each CRI may include Ceiling (log₂ (K-P)) bits to indicate one of the K-P CSI-RS resources.

As another example, each CRI may indicate one of the K-P CSI-RS resources via a K-P bitmap.

As another example, to indicate which combination of L-P CSI-RS resources is selected from among various combinations of selecting L-P resources from the total K-P resources, the (total) bit width of the CRI may be determined as in Expression 5. [Expression 5] $\left.\left⌈{log}_{2}\left(\begin{matrix}K - P \\ L - P\end{matrix}\right)\right⌉\right)$

At least one of K, L, and P values may be provided to the UE via network signaling (e.g., RRC signaling).

For example, CRI may be omitted for P CSI-RS resources indicated by the BS. For example, P CRIs may not be transmitted, and L-P CRIs may be included in the CSI report.

For convenience of explanation, an example of the following resource configuration will be considered. As an example of multiple CRI reporting, when 128 CSI-RS is configured and indicated, it is assumed that a plurality of CSI-RS resources are configured within the CSI-RS resource set as shown below.
- CSI-RS resource #1 → 32 port CSI-RS,
- CSI-RS resource #2 → 32 port CSI-RS,
- CSI-RS resource #3 → 32 port CSI-RS,
- CSI-RS resource #4 → 32 port CSI-RS,
- CSI-RS resource #5 → 32 port CSI-RS,
- CSI-RS resource #6 → 32 port CSI-RS,
- CSI-RS resource #7 → 32 port CSI-RS,
- CSI-RS resource #8 → 32 port CSI-RS,

Then, from among the 8 CSI-RS resources (K=8), 4 (L=4) are selected to perform CSI reporting based on (total) 128 port CSI-RS. A criterion for selecting L resources from among K resources is that L CSI-RS resources may be selected based on RSRP/SINR/CQI measured by the UE.
(1) In the case of Method 1, in the above example, ₈C₄ (8*7*6*5/4! = 56) has a CRI bit field of a total 6 bits, and CRI for 4 resources is commonly indicated.
(2) In the case of Method 2, assuming that K1=K2=K3=K4 are each configured to a value of 2, and CSI-RS resources #1 and #2 correspond to K1, CSI-RS resources #3 and #4 correspond to K2, CSI-RS resources #5 and #6 correspond to K3, and CSI-RS resources #7 and #8 correspond to K4, then based on ceiling log₂ 2 = 1, for L=4 CSI-RSs reported based on 1 bit each, a total of 4 bits, either 4 bits are indicated in common for the resources, or 1-bit CRI is indicated for each resource reported using a 1-bit CRI field. For convenience of configuration and reporting in Method 2, it may be promised to be limited to K₁ =K₂,...,=K_{L}=K/L. Another method of determining a bit width in Method 2 is to consider the following.

- The bit width for joint indication for L groups may be Ceiling (log₂ K₁K₂..K_{L}).
- To prevent field size variation for each group when reporting each L CRIs, the bit width may be as shown in Expression 6.
[Expression 6] $L ∗ \left⌈{log}_{2} {max}_{i = 1 , … , L}{K}_{i}\right⌉$

(3) In the case of Method 3, 4 resources may be indicated using an 8-bit map, and for example, in the case of "10101010", it may mean indicating CSI-RS resources #1, #3, #5, and #7, respectively.

(4) Method 4 is a method in which an index of a CSI-RS resource group/combination is reported through CRI instead of the CRI explicitly indicating CSI-RS resources. For example, if M=2, a 1st group is indicated/configured as "CSI-RS resource #1, #3, #5, and #7" and a 2nd group is indicated/configured as "CSI-RS resource #2, #4, #6, and #8", it means that whether it is the 1st group or the 2nd group is reported through CRI with 1 bit. In the case of the group, although the above example expresses mutually exclusive, in some cases, it is also possible for resources between groups to overlap each other through a configuration of the BS.

(5) In the case of Method 5, in the above proposal,
- CSI-RS resource #1 → 32 port CSI-RS,
- CSI-RS resource #2 → 32 port CSI-RS,
- CSI-RS resource #3 → 32 port CSI-RS,
- CSI-RS resource #4 → 32 port CSI-RS,

This means that when the CSI-RS resource set is configured as above (K=4) and L=4, the UE reports CSI for all resources in the resource set, and in this case, CRI is omitted.

(6) In the case of Method 6, CSI for P CSI-RS resources commonly applied to a plurality of UEs needs to be reported, and thus the BS may use the corresponding CSI-RS resource for MU-MIMO at a desired time.

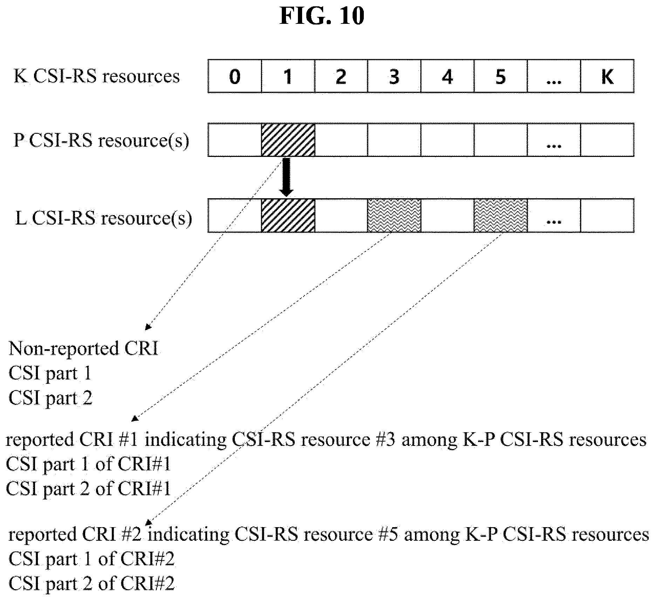

FIG. 10 is a diagram for explaining a method of performing CSI reporting for a plurality of CSI-RS resources by using Method 6. In FIG. 10, the K, P, and L values may be provided to a UE via higher layer signaling of information about CSI reporting configuration.

Based on the P CSI-RS resources from among the K CSI-RS resources indicated by a network, L-P CSI-RS resources may be selected from among the K-P resources. In the example of FIG. 10, for convenience, it is assumed that P = 1 and L-P = 2.

A UE may transmit CSI reports for a total of L CSI-RS resources to the network. In this case, CRI reporting may be omitted for P CSI-RS resources (e.g., CSI-RS resource #1) indicated by the network, and only Part 1/2-CSI may be reported. CRIs (e.g., CRI#1, CRI#2) may be reported for L-P CSI-RS resources selected by the UE itself. CRI#1 may include information (e.g., bits) indicating CSI-RS resource #3 from among the K-P CSI-RS resources, and CRI#2 may include information (e.g., bits) indicating CSI-RS resource #5 from among the K-P CSI-RS resources.

The number of CSIs reported by an actual UE by measuring/calculating CSI-RS may be different from the L value configured/instructed by the BS. For example, in the above example, the L value is indicated as 4, but the number of CSIs actually reported may be determined to be 2 based on the measurement/calculation results of the UE (e.g., through SINR measurement per resource). In this case, a problem may arise where a CSI payload determined by the BS and a CSI payload actually reported by the UE are different. To this end, the above methods may be considered.

### Proposal 1-1

When a UE selects M CSI-RS resources, which are less than the L CSI-RS resources that the BS configures/instructs to report to the UE from among a plurality of K CSI-RS resources, and performs CSI reporting for a plurality of M resources, a CSI-RS resource indicator (CRI) is calculated/reported in the following method. Here, M≤L≤K.
- Method A: A bit width for CRI is configured as in Expression 7, and a value of M is determined according to the corresponding codepoint.
[Expression 7] $\left⌈{log}_{2}\left({\sum }_{i = 1}^{L} \left(\begin{matrix}K \\ i\end{matrix}\right)\right)\right⌉$
- Method B: M CSI-RS resources are reported with K-bitmaps, as in Method 3.
- Method C: Information on a value of M for CSI part 0, and CRI is reported using methods of Proposal 1 (replacing a value of L with M). Here, CSI part 0 refers to CSIs that include CSI contents that determine a payload of CSI part 1.

In Proposal 1-1 above, a criterion of the UE selecting M resources may select M CSI-RS resources based on RSRP/SINR/CQI/RI/Throughput and/or threshold measured by the UE. As an example of the threshold, the UE may instruct/configure through a higher layer (e.g., RRC, MAC-CE, or DCI) to select M CSI-RS resources within -Y dB of a minimum requirement value for RSRP/SINR (e.g., X dB) or the RSRP/SINR/CQI value of the best CSI-RS resource (e.g., resource corresponding to SCRI).

For example, when a minimum requirement is instructed/configured, RSRP/SINR for each resource may be measured/calculated, and M resources that obtain a requirement may be selected. If the selected value of M is greater than L, the UE selects L resources (e.g., best L resources) and performs CRI reporting.

For example, if a value of Y is indicated/configured to 3 dB in an operation based on the best CSI-RS resource, M resources having SINR/RSRP/CQI performance within a 3dB difference compared to the SINR/RSRP of the best CSI-RS are selected and the CRI is reported. If the selected value of M is greater than L, the UE selects L resources (e.g., best L resources) and performs CRI reporting.

In the case of Method A of Proposal 1-1, M may be located between 1 and L by jointly indicating _{K}C₁+_{K}C₂+..+_{K}C_{L}, and the BS may know information about a value of M based on the codepoint. In the case of Method C, it means 3 part encoding, for CSI part 0, information about M is reported, and CSI part 1 and CSI part 2 are reported by the UE as in the existing legacy. CSI part 1 includes CRI, RI, and CQI for 1st CW, # of non-zero coefficient (only for Type 2), and CSI part 2 includes CQI for 2nd CW, PMI, and LI. In other words, CSI part 0 includes CSI contents with a fixed payload to determine a payload of CSI part 1, and for CSI part 2, a payload is determined based on contents of CSI part 1.

If Method 6 of Proposal 1 above is applied, a value of K or L may be applied as K-P and L-P, and Methods A/B/C above may be applied and configured.

### Proposal 2

To select a plurality of CSI-RS resources from among a plurality of CSI-RS resources and report CSI for a plurality of resources, a rank indicator (RI) may be calculated/reported based on at least one of the following methods.
(0) Method 0: RI is reported/calculated separately/independently for each of the plurality of CSI-RS resources.
(1) Method 1: The plurality of CSI-RS resources are commonly reported as one RI value.
(2) Method 2: For a representative/reference resource, RI is reported as in the existing legacy CSI report, and for the remaining resources, a differential value is reported based on the representative/reference resource.
(3) Method 3: A RI report corresponding to the best N (e.g., N=1) resources (e.g., representative resource) from the plurality of CSI-RS resources may be freely reported, but the resources reporting the remaining CSI may be limited to a specific RI value (e.g., RI=r, where r is configurable by gNB) or may be commonly reported to the resources.

In the case of Method 0 in Proposal 2 above, there is an advantage in that a more accurate RI value may be reported for each CSI-RS by reporting RI for each CSI-RS resource. For example, for each of L(>1) CSI-RS resources, L RIs may be separately calculated/reported. However, there may be a disadvantage of increasing CSI overhead and increasing the CSI-RS calculation complexity of the UE.

In the case of Method 1, as a method to resolve the problems described above in Method 0, the same RI value is limited for all resources, and the RI report is reported only for the representative resource, or, as in Method 3 of Proposal 1-1, a common RI value may be included and reported in CSI part 0. For Method 2, as a method to reduce a payload of Method 0, the remaining resources are reported based on a differential value (e.g., 1-bit/2-bit differential indicator) based on an RI value in the CSI report for a specific reference resource. The differential RI may include examples of Table 8 (1 bit) and Table 9 (2 bits).

**[Table 8]**

| Index | Differential RI |
|---|---|
| 0 | 0 |
| 1 | -1 |

**[Table 9]**

| Index | Differential RI |
|---|---|
| 0 | 1 |
| 1 | 0 |
| 2 | -1 |
| 3 | -2 |

In the case of Table 8 above, a value corresponding to the representative/reference resource, which is appropriate for option 2 described below, always has the largest RI value, and the remaining value is appropriate for the case of 0 or minus values.

In the case of Method 3 above, if the number of CSI resources that the UE needs to report is L, full RI is reported for N, and the remaining N-L are reported with predefined rank values, or (N-L) resources are commonly reported as a single value. In the case of the predefined/configured rank, RI reporting of the N-L resources may be omitted.

Representative/reference resources in Methods 1, 2 and 3 above may be determined and indicated based on the following options. The reference resource does not mean a resource that serves as a standard for CQI measurement in TS 38.214, but rather a representative or standard resource from among a plurality of CSI-RS resources.
(i) Option 1: The CSI-RS resource corresponding to the first/last/medium in the order in which the CSI-RS resources are configured in the CSI-RS resource config (or the order in which the CSI-RS resources are configured in the group, as in Method 4/5 of Proposal 1) is determined as the representative resource.
(ii) Option 2: A separate strongest CSI-RS resource indicator is provided and a resource corresponding to the indicator is determined as the representative resource.
(iii) Option 3: The representative resource is determined based on the lowest/highest index order of the CSI-RS resource ID.
(iv) Option 4: In the order of receiving CSI-RS resources, the resource corresponding to first/last/medium is determined as the representative resource.

The above options may be applied to all K resources that the BS configures for the UE, but may also be applied to a method of selecting a reference/representative resource from among the CSI-RS resources corresponding to L CSI reports that the BS configures and/or the UE selects and reports from among the total K resources.

In the case of the strongest CSI-RS resource in Option 2 above, the resource with the highest CSI-RS reception SINR or RSRP is determined as the representative resource, or the resource with the highest RI (if there are a plurality of resources, based on options 1, 3, and 4) is determined as the representative resource. The strongest CSI-RS resource indicator (SCRI) may be included in CSI part 0 or included in CSI part 1 and reported to the BS. The CSI corresponding to the CSI-RS indicated by the strongest CSI-RS resource indicator is likely to be the best CSI value of the UE, and thus a report for the best CSI may be configured to report a more accurate CSI value than a report corresponding to other CSI-RS resources. For example, when RI/CQI corresponds to SCRI, an RI/CQI value of full information rather than differential value may be reported or the granularity may be increased and reported. In the case of PMI, CSI reports corresponding to SCRI, in particular, a type 2 codebook-based reports may report the granularity of phase and amplitude with 4 bit/4 bit, but the remaining CSI reports may be reported with a lower granularity (e.g., 3 bit/3 bit granularity of phase and amplitude) to reduce a payload.

### Proposal 3

To select a plurality of CSI-RS resources from among a plurality of CSI-RS resources and report CSI for a plurality of resources, a channel quality indicator (CQI) may be calculated/reported based on at least one of the following methods.

(0) Method 0: CQI may be reported/calculated separately/independently for each of the plurality of CSI-RS resources. For example, for each of L(>1) CSI-RS resources, L CQIs may be separately calculated/reported.
(1) Method 1: The plurality of CSI-RS resources are commonly reported as one CQI value.
(2) Method 2: For a representative/reference resource, CQI is reported as in the existing legacy CSI report, and for the remaining resources, a differential value is reported based on the representative/reference resource.
(3) Method 3: A CQI report corresponding to the best N (e.g., N=1) resources (e.g., representative resource) from the plurality of CSI-RS resources may be freely reported, but the resources reporting the remaining CSI may be limited to a specific CQI value (e.g., RI=r, where r is configurable by gNB) or may be commonly reported to the resources.

These may be applied to Proposal 3 above, similarly to Proposal 2. However, configuring/instructing the same CQI value to all resources as in Method 1 may slightly go against the purpose of increasing MU pairing. However, in terms of NW energy saving, the CQI value may be configured for giving a common CQI, configuring a different number of ports per resource, and receiving a CSI report on whether a target CQI is to be obtained. In this case, the target CQI may be preconfigured by the BS via a higher layer, and the UE may report to the BS whether the target CQI is obtained using a CQI field, the CRI field (reporting means that the target CQI has been obtained), or a new field. Alternatively, a difference from the target CQI may be reported to the BS by using the differential CQI. The differential CQI value may use a legacy differential CQI table or include Table 8/9 of Proposal 2 or Table 10 (2 bits) below as an example. The reference resource may also utilize/apply the options of Proposal 2 without change.

**[Table 10]**

| Index | Differential CQI |
|---|---|
| 0 | 0 |
| 1 | -1 |
| 2 | -2 |
| 3 | -3 |

In the case of Method 3 above, if the number of CSI resources that the UE needs to report is L, full CQI is reported for N, and the remaining N-L are reported as CQI with predefined CQI (target CQI) or (N-L) resources are commonly reported as a single value. In the case of the predefined/configured CQI, CQI reporting of the N-L resources may be omitted.

### Proposal 4

To select a plurality of CSI-RS resources from among a plurality of CSI-RS resources and report CSI for a plurality of resources, a precoding matrix indicator (PMI) may be calculated using the following methods.

(0) Method 0: PMI is reported/calculated for each of the plurality of CSI-RS resources.
(1) Method 1: Common PMI and resource-specific PMI are distinguished, and the common PMI is PMI that commonly corresponds to a plurality of CSI-RS resources, and resource-specific PMI means PMI specialized for each resource. The common PMI is reported only in the CSI report corresponding to the representative resource determined by the representative resource configuring method of Proposal 2/3, and the resource-specific PMI is reported resource wise.
(2) Method 2: Method in which CSI reporting for the representative resource determined by the representative resource configuration method of Proposal 2/3 or the best N (e.g. N=1 configured by the BS to the UE) CSI resources is SB CSI reporting, and CSI reporting for the remaining CSI resources is limited to WB CSI reporting

For Proposal 4 above, a plurality of CSI-RS resources may be restricted to the same number of CSI-RS ports and/or codebook types. For example, in the above example, the codebook type may be configured to 32-port, Type 1 or Type 2 codebook. It may be expected that a codebook parameter is also configured to the same way. For example, a parameter combination of the Rel-16 Type 2 codebook (e.g., enhanced Type 2) described in Table 6 above may be configured commonly to resources. In this case, the number of CSI-RS resources for which the UE reports CSI may be L=2, but is not limited thereto.

For example, when more accurate CSI reports for the (SCRI) resource corresponding to the best CSI-RS resource as described in Proposal 3 intends to be received, a parameter combination therefor may be configured to a large value. For example, different codebook parameters may be configured for each resource (resource group). For example, resources corresponding to SCRI may indicate/configure index 6 of the paramCombination-r16, and the remaining resources may also configure index 2. As another example, the CSI report corresponding to SCRI may perform full PMI reporting, while the remaining CSI reports may only report some PMI (e.g., WB PMI (e.g., i11 or i12)) or may not perform PMI reporting.

For codebook subset restriction configured by the UE for interference management, the SD basis restriction and/or per SD group basis amplitude restriction described above are supported. It may be promised that this codebook subset restriction (CBSR) is commonly applied to a plurality of CSI-RS resources. Alternatively, a level of interference to neighboring cells may differ for each CSI-RS resource, and thus the codebook subset restriction (CBSR) may be configured to resource-wise CBSR (per CMR). For example, a CSI-RS resource-specific codebook subset restriction (CBSR) may be configured separately for each of the K CSI-RS resources. Alternatively, a plurality of CSI-RS resources may be grouped into a plurality of groups, and CBSR (per CMR group) may be configured/applied to each group. An example of the grouping includes an example of Method 3/4 of Proposal 1.

In Method 1 above, WB PMI may be assumed as a representative attribute of PMI belonging to common PMI. For example, a spatial domain basis (i.e., 1D/2D DFT vector for SD) is a representative example of the WB PMI, which is a PMI reported in TS 38.214 (section 5.2.2.2) with indices of i_{1,1} and i_{1,2}. The remaining resource-specific PMI is the remaining PMI excluding the WB PMI.

As another example, a method in which values transmitted as CSI part 1 of PMI are configured commonly to resources and the remaining PMI parts (values transmitted as CSI part 2) are reported separately for each CSI-RS may be considered. For example, the PMI part belonging to CSI part 1 may have a non-zero power coefficient across rank that is linearly combined in type 2 CSI. If this part is commonly provided, there is an advantage of reducing a payload.

In the case of Method 2, the CSI report for the representative resource determined by the representative resource configuration method of Proposal 2/3 or the best N (e.g. N=1 configured by the BS to the UE) CSI resources is SB CSI report, and the CSI report for the remaining CSI resources is limited to WB CSI report, and in this case, for resources with good performance, frequency selectivity is reflected and reported, and for the remaining resources, only WB CSI for the configured BW is reported, and thus a payload of the PMI report may be reduced. In addition to Method 2 above, the BS may configure/instruct information about the resource to be reported SB CSI/WB CSI via a higher layer.

The layer indicator (LI), which means the strongest layer, may be reported resource-wise.

### Proposal 5

When a plurality of CSI-RS resources are selected from a plurality of CSI-RS resources and CSI reporting is performed on a plurality of resources, if the UE includes a plurality of Rx antenna groups (or panels) and receives a specific CSI-RS resource with a specific Rx antenna group (or panel), information about the Rx antenna group (or panel) may also be included in the CSI report and reported.

In the case of Proposal 5 above, the plurality of CSI-RS resources may be divided into Rx antenna groups (or panels or Rx beams) and the UE may perform reception and/or CSI calculation for the plurality of CSI-RS resources, and in this case, an operation by Rx antenna group is possible, which may increase scheduling flexibility in terms of the BS. Therefore, the information may also be included and reported in the CSI report, and in particular may be a value included and reported in CSI part 1. For example, if the UE uses two Rx antenna groups, a value of one of Rx antenna group 1, Rx antenna group 2, or both Rx antenna groups with 2 bits may be reported. The UE may report information on the maximum CSI-RS resources that is to be simultaneously received by an Rx antenna group (or panel or Rx beam) common or by each Rx antenna group (or panel or Rx beam) as UE capability.

### Proposal 6

In a CSI report corresponding to a plurality of CSI-RSs reported based on some or all of Proposals 1/1-1/2/3/4/5, CSI is reported in the following CSI encoding order.
(1) Method 1: CSI part 0 (if present) → CSI part 1 (for CSI report #1) → CSI part 2 (for CSI report #1) → CSI part 1 (for CSI report #2) → CSI part 2 (for CSI report #2) → ... CSI part 1 (for CSI report #L) → CSI part 2 (for CSI report #L)
(2) Method 2: CSI part 0 (if present) → CSI part 1 (for CSI report #1) → CSI part 1 (for CSI report #2) ... → CSI part 1 (for CSI report #L) → CSI part 2 (for CSI report #1) → CSI part 2 (for CSI report #2) → ... CSI part 2 (for CSI report #L)

In the case of Method 1, CSI is encoded in the order of report ID, and in the case of Method 2, CSI is reported by first grouping by high level CSI part and then grouping by a next level part. In Methods 1 and 2 of Proposal 6 above, the CSI report ID is defined separately (e.g., based on mapping rules between CRI and CSI report), and the report ID may be included and reported in Part 1 CSI. Alternatively, the order in which the plurality of CSI-RS resources are indicated within the CRI is implicitly determined, in which case report ID reporting is omitted. For example, the L-P CSIs for the L-P CSI-RS resources may be sorted according to the order in which the L-P CRIs are arranged in the CSI report.

If the strongest CSI-RS resource indicator of Proposal 1/1-1 is introduced, report ID #1 is determined as the CSI report corresponding to the strongest CSI-RS resource indicator, and the remaining IDs are reported in order by a specific rule (e.g., the CSI-RS resource ordering method of Proposal 1/2/3/4/5), except for the CSI corresponding to the strongest CSI-RS resource indicator.

For Proposals 1/1-1/2/3/4/5/6, a common IMR resource (ZP CSI-RS or NZP-CSI-RS) may be configured and applied to a plurality of CMR resources (K). IMR resources may be applied/configured to ZP CSI-RS and NZP CSI-RS.

This has an advantage of alleviating the complexity of interference measurement at the UE. However, in case of MU pair criterion, it may vary depending on a type of interference (e.g., hypothesis may vary depending on a pair of CMR and IMR), and in this case, the BS may configure a plurality of IMR (ZP / NZP CSI-RS). For example, a plurality of NZP CSI-RSs (J) may be configured for IMR. In this case, the SINR/CQI calculation according to the IMR (ZP/NZP CSI-RS) may be different, and thus one CRI may be used to indicate the CMR + IMR (ZP/NZP CSI-RS) pair and be reported to the BS.

As an example, the following example is described. (K=4 and J=2)
- CMR#1: CSI-RS resource #1 → 32 port CSI-RS,
- CMR#2: CSI-RS resource #2 → 32 port CSI-RS,
- CMR#3: CSI-RS resource #3 → 32 port CSI-RS,
- CMR#4: CSI-RS resource #4 → 32 port CSI-RS,
- IMR#1: NZP CSI-RS resource #1 → pattern 0 (2-by-2 REs)
- IMR#2: NZP CSI-RS resource #2 → pattern 1 (4-by-1 REs),

In the above example, 4 CMRs and 2 IMRs (NZP CSI-RS) may be configured, and the total number of pairs of CMRs and IMRs may be 8. Therefore, CRI may be used to indicate the eight CMR and IMR pairs, and the value K may be replaced with the value (K*J) and configured/applied in Proposals 1 and 1-1. When the IMR (ZP/NZP-CSI-RS) is mapped to the CMR on a 1:1 basis, the total hypothesis (K*J) increases, which may increase the size of a CRI field. To this end, IMR (ZP/NZP-CSI-RS) may be promised to be configured/applied per one CMR group, and the CMR group may be configured by the BS to a higher layer or promised in advance. For example, in the above example, CMR#1 and CMR#2 may be classified as CMR group#1, CMR#3 and CMR#4 may be classified as CMR group#2, and different IMRs may be mapped to CMR group#1 /#2, and for example, IMR#1 may be mapped to CMR group#1, and IMR#2 may be mapped to CMR group#2. In this case, there is an advantage in that the number of hypotheses is reduced by half, from 8 in the former case to a total of 4. In the above example, only NZP CSI-RS is explained as being used for IMR, which may be expanded to include an example of using ZP CSI-RS as IMR and/or an example of using NZP CSI-RS and ZP CSI-RS together for IMR. In the case of reporting RI/CQI/PMI, and the like commonly to resources in Proposals 2/3/4, the Proposals 2/3/4 above may be applied only to CMR resources configured to the same IMR.

In the case of Proposals 1/1-1/2/3/4/5/6 above, the UE selects a plurality of resources to report from a plurality of CSI-RS resources configured by the BS, and performs resource-wise CSI reporting corresponding to the number of CSI-RS ports indicated/configured for the plurality of resources selected, and in this reporting, for reporting efficiency and payload reduction, CSI corresponding to common part/differential part may be distinguished and reported.

Multiple CSI hypothesis may be considered for further expansion to increase the scheduling flexibility of the BS. In the above example, a hypothesis due to pairs of CMR/IMR resources is considered, but CMR resource aggregation may also be considered as another hypothesis. As an example, selection of CMRs to be aggregated using the CRI instruction method in Proposal 1/1-1 may be considered. In this case, 4 CMRs may be selected/reported from among the 8 CMRs described in Proposal 1 above and PMI/CQI/RI for 128 ports may be reported. Alternatively, through CRI, if best 3 and/or 2 and/or 1 CMR are used, some or all of the CSI (e.g., PMI/CQI/RI) for aggregated 96/64/32 ports may be reported together. In this case, the BS may perform a port on/off operation in terms of NW energy saving or allocate the corresponding resource to another UE based on the reported CSIs. The UE may select and report to the BS the number of CMRs to be aggregated (via Proposal 1/1-1), but the BS may configure/instruct in advance through a higher layer. For example, in the hypothesis for the CSI measurement, the BS may configure information on a combination to be indicated as CRI in advance to the UE.

An example thereof is described below.
- CMR#1: CSI-RS resource #1 → 32 port CSI-RS,
- CMR#2: CSI-RS resource #2 → 32 port CSI-RS,
- CMR#3: CSI-RS resource #3 → 32 port CSI-RS,
- CMR#4: CSI-RS resource #4 → 32 port CSI-RS

**[Table 11]**

| CRI index | 1 | 2 | 3 | 4 | 5 | 6 | 7 | 8 |
|---|---|---|---|---|---|---|---|---|
| CMR Combination | 1,2,3,4 | 1,2 | 1,3 | 2,4 | 1 | 2 | 3 | 4 |

In the case of the above example, if a plurality of CRIs are selected, it may be understood that the corresponding resources are aggregated and reported, and the BS may additionally instruct the UE whether this is a CSI report for a resource including an aggregation or a separate report for a plurality of CSI-RSs.

As another example, for network energy saving, the BS may intend to receive CSI for each case of 128-port, 64-port, and 32-port, and based on the above information, the BS may determine the number of antenna ports to be activated. Therefore, rather than jointly performing CRI indication as above, an aggregation port for each sub-configuration may be indicated and CSI therefor may be received as shown below.

Tables 12 and 13 are modified examples of the above example.

Table 12 shows Sub-configuration #1 (128-port) and does not require CRI.

**[Table 12]**

| CRI index | 1 |
|---|---|
| CMR Combination | 1,2,3,4 |

Table 13 shows Sub-configuration #2 (for 64-port use), where CRI is 2 bits.

**[Table 13]**

| CRI index | 1 | 2 | 3 |
|---|---|---|---|
| CMR Combination | 1,2 | 1,3 | 2,4 |

Table 14 shows Sub-configuration #3 (for 32-port use), where CRI is 2 bits.

**[Table 14]**

| CRI index | 1 | 2 | 3 | 4 |
|---|---|---|---|---|
| CMR Combination | 1 | 2 | 3 | 4 |

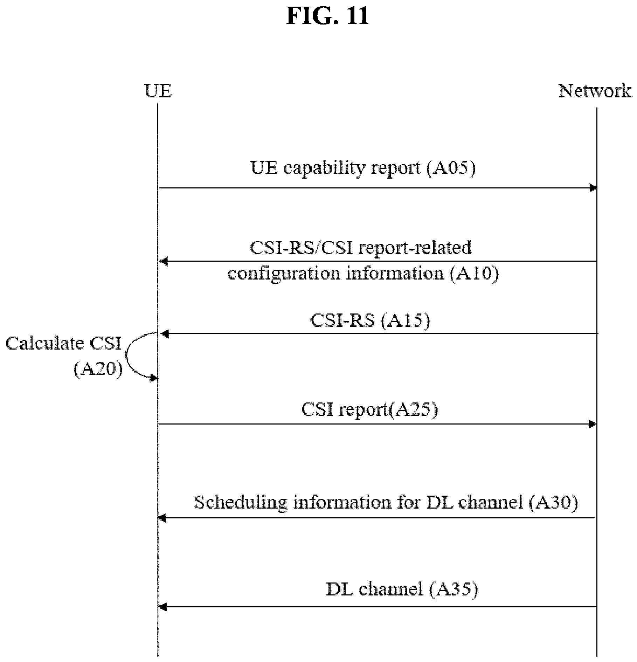

FIG. 11 is a diagram for explaining a method for a UE to report CSI to a network according to an embodiment. FIG. 11 may relate to at least one of Proposals 1/1-1/2/3/4/5/6 described above.

Referring to FIG. 11, the UE may transmit a UE capability report to a BS via higher layer signaling (A05). The UE capability report may include, but is not limited to, at least one of the maximum number of CSI-RS resources/maximum number of CSI-RS ports that the UE is capable of supporting, the total number of CSI-RS ports that are to be supported simultaneously, and/or the number of Rx antenna groups.

The UE may receive configuration information related to CSI RS transmission and/or CSI reporting from the BS (A10).

The UE may receive CSI-RS(s) from the BS (A15) and measure/predict/calculate CSI (A20).

The UE may report measured/predicted/calculated CSI to the BS (A25).

The UE may receive information for scheduling a downlink channel (e.g., PDCCH or PDSCH) from the BS (A30).

The UE may receive a scheduled downlink channel (e.g., PDCCH or PDSCH) (A35).

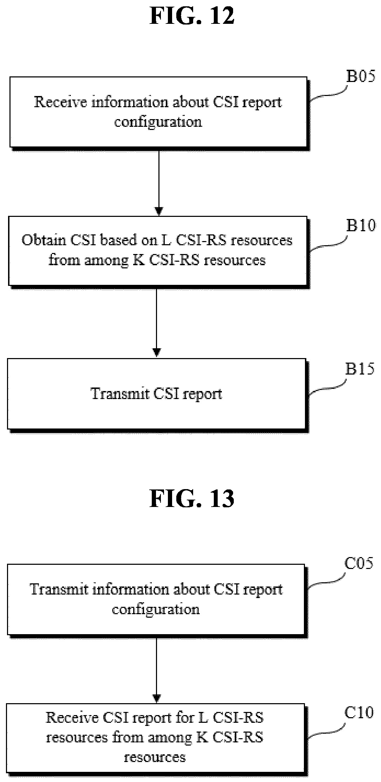

FIG. 12 is a flowchart of a method performed by a UE according to an embodiment.

Referring to FIG. 12, the UE may receive information about channel state information (CSI) reporting configuration via higher layer signaling (B05).

The UE may obtain CSI based on L CSI-reference signal (CSI-RS) resources from among K CSI-RS resources (B10). From among the L CSI-RS resources, P CSI-RS resources may be determined through information about the CSI reporting configuration. The remaining L-P CSI-RS resources may be selected by the UE.

The UE may transmit a CSI report based on the CSI (B15). The CSI report may include L-P CSI-RS resource indicators (CRIs) for the L-P CSI-RS resources selected by the UE.

The L-P CSI-RS resources may be selected from among the remaining K-P CSI-RS resources excluding the P CSI-RS resources from among the K CSI-RS resources.

Each of the L-P CRIs may include bits for indicating which of the K-P CSI-RS resources each CRI is related to.

The total number of bits included in each CRI may be determined based on K-P.

The CSI report may be related to a Type-2 CSI codebook (e.g., enhanced Type 2). A combination of parameters configuring the Type-2 CSI codebook may be configured commonly to the L CSI resources.

The CSI report may be configured to separately report a rank indicator (RI) for each of the L CSI-RS resources.

The CSI report may be configured to separately report a channel quality indicator (CQI) for each of the L CSI-RS resources.

A codebook subset restriction (CBSR) for a CSI codebook may be configured for each CSI-RS resource.

For example, the L-P CSIs for the L-P CSI-RS resources may be sorted according to the order in which the L-P CRIs are arranged in the CSI report.

FIG. 13 is a flowchart of a method performed by a BS according to an embodiment.

Referring to FIG. 13, the BS may transmit, to the UE, information about channel state information (CSI) reporting configuration via higher layer signaling (C05).

The BS may receive a CSI report from the UE for L CSI-reference signal (CSI-RS) resources from among K CSI-RS resources configured in the UE (C10).

From among the L CSI-RS resources, P CSI-RS resources may be determined through information about the CSI reporting configuration, and the remaining L-P CSI-RS resources may be selected by the UE. The L-P CSI-RS resources may be selected from among the remaining K-P CSI-RS resources excluding the P CSI-RS resources from among the K CSI-RS resources.

The CSI report may include L-P CSI-RS resource indicators (CRIs) for the L-P CSI-RS resources selected by the UE. Each of the L-P CRIs may include bits for indicating which of the K-P CSI-RS resources each CRI is related to. The total number of bits included in each CRI may be determined based on K-P.

The CSI report may be related to a Type-2 CSI codebook (e.g., enhanced Type 2). A combination of parameters configuring the Type-2 CSI codebook may be configured commonly to the L CSI resources.

The CSI report may be configured to separately report a rank indicator (RI) for each of the L CSI-RS resources.

The CSI report may be configured to separately report a channel quality indicator (CQI) for each of the L CSI-RS resources.

A codebook subset restriction (CBSR) for a CSI codebook may be configured for each CSI-RS resource.

For example, the L-P CSIs for the L-P CSI-RS resources may be sorted according to the order in which the L-P CRIs are arranged in the CSI report.

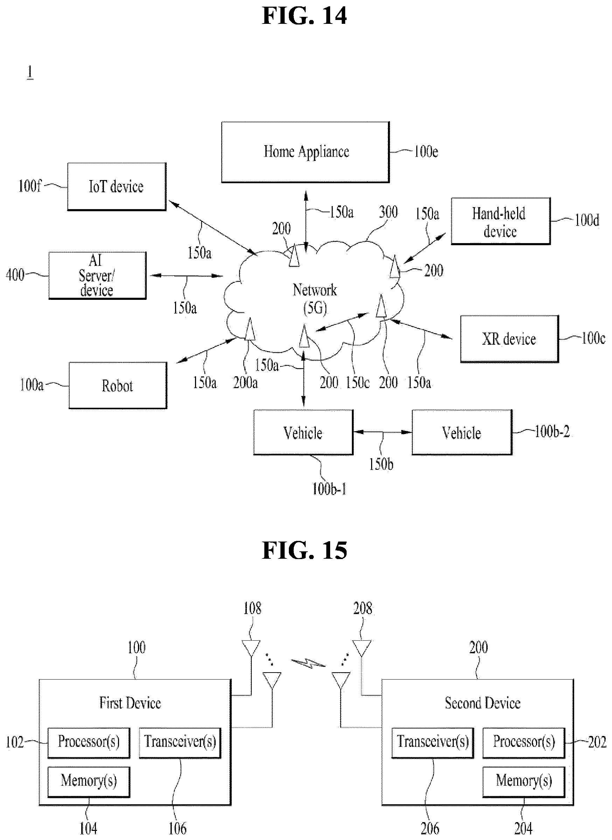

FIG. 14 illustrates a communication system 1 applied to the present disclosure.

Referring to FIG. 14, a communication system 1 includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 15 illustrates wireless devices applicable to the present disclosure.

Referring to FIG. 15, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 14.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

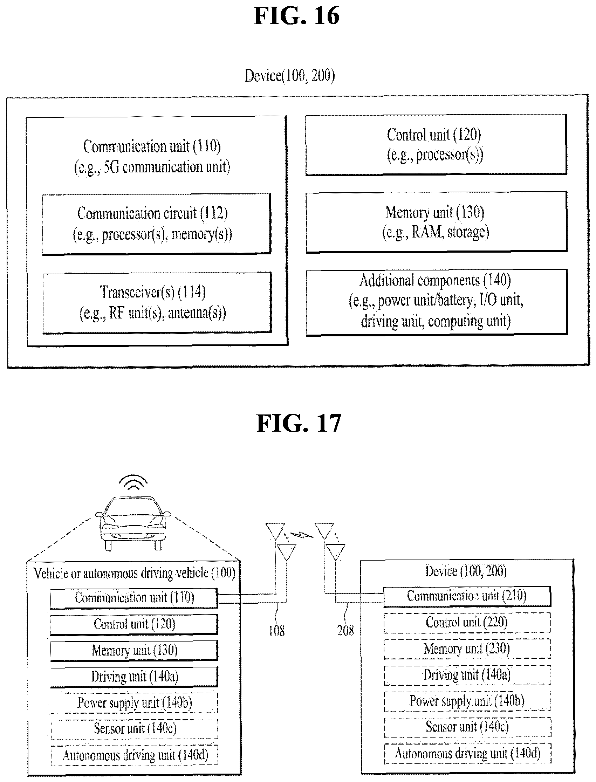

FIG. 16 illustrates another example of a wireless device applied to the present disclosure. The wireless device may be implemented in various forms according to a use-case/service (refer to FIG. 14).

Referring to FIG. 16, wireless devices 100 and 200 may correspond to the wireless devices 100 and 200 of FIG. 15 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 15. For example, the transceiver(s) 114 may include the one or more transceivers 106 and 206 and/or the one or more antennas 108 and 208 of FIG. 15. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 14), the vehicles (100b-1 and 100b-2 of FIG. 14), the XR device (100c of FIG. 14), the hand-held device (100d of FIG. 14), the home appliance (100e of FIG. 14), the IoT device (100f of FIG. 14), a digital broadcast terminal, a hologram device, a public safety device, an MTC device, a medicine device, a fintech device (or a finance device), a security device, a climate/environment device, the AI server/device (400 of FIG. 14), the BSs (200 of FIG. 14), a network node, etc. The wireless device may be used in a mobile or fixed place according to a use-example/service.

In FIG. 16, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 17 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 17, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 16, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

The above-described embodiments correspond to combinations of elements and features of the present disclosure in prescribed forms. And, the respective elements or features may be considered as selective unless they are explicitly mentioned. Each of the elements or features can be implemented in a form failing to be combined with other elements or features. Moreover, it is able to implement an embodiment of the present disclosure by combining elements and/or features together in part. A sequence of operations explained for each embodiment of the present disclosure can be modified. Some configurations or features of one embodiment can be included in another embodiment or can be substituted for corresponding configurations or features of another embodiment. And, it is apparently understandable that an embodiment is configured by combining claims failing to have relation of explicit citation in the appended claims together or can be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### INDUSTRIAL APPLICABILITY

The present disclosure is applicable to UEs, BSs, or other apparatuses in a wireless mobile communication system.

## Claims

1. A method performed by a user equipment (UE), the method comprising:
receiving information about channel state information (CSI) reporting configuration via higher layer signaling;
obtaining CSI based on L CSI-reference signal (CSI-RS) resources from among K CSI-RS resources; and
transmitting a CSI report based on the CSI,
wherein, from among the L CSI-RS resources, P CSI-RS resources are determined through information about the CSI reporting configuration, and remaining L-P CSI-RS resources are selected by the UE, and
wherein the CSI report includes L-P CSI-RS resource indicators (CRIs) for the L-P CSI-RS resources selected by the UE.

2. The method of claim 1, wherein the L-P CSI-RS resources are selected from among remaining K-P CSI-RS resources excluding the P CSI-RS resources from among the K CSI-RS resources.

3. The method of claim 1, wherein each of the L-P CRIs includes bits for indicating which of the K-P CSI-RS resources each CRI is related to.

4. The method of claim 1, wherein a total number of bits included in each CRI is determined based on K-P.

5. The method of claim 1, wherein the CSI report is related to a Type-2 CSI codebook, and
wherein a combination of parameters for configuring the Type-2 CSI codebook is configured commonly to the L CSI resources.

6. The method of claim 1, wherein the CSI report is configured to separately report a rank indicator (RI) for each of the L CSI-RS resources.

7. The method of claim 1, wherein the CSI report is configured to separately report a channel quality indicator (CQI) for each of the L CSI-RS resources.

8. The method of claim 1, wherein a codebook subset restriction (CBSR) for a CSI codebook is configured for each CSI-RS resource.

9. The method of claim 1, wherein the L-P CSIs for the L-P CSI-RS resources are sorted according to an order in which the L-P CRIs are arranged in the CSI report.

10. A non-transitory computer-readable recording medium having recorded thereon a program for performing the method of claim 1.

11. A device comprising:
a memory configured to store instructions; and
a processor configured to execute the instructions to perform operations,
wherein the operations of the processor include:
receiving information about channel state information (CSI) reporting configuration via higher layer signaling;
obtaining CSI based on L CSI-reference signal (CSI-RS) resources from among K CSI-RS resources; and
transmitting a CSI report based on the CSI,
wherein, from among the L CSI-RS resources, P CSI-RS resources are determined through information about the CSI reporting configuration, and remaining L-P CSI-RS resources are selected by the UE, and
wherein, the CSI report includes L-P CSI-RS resource indicators (CRIs) for the L-P CSI-RS resources selected by the UE.

12. The device of claim 11, further comprising a transceiver,
wherein the device is a user equipment (UE) in a wireless communication system.

13. The device of claim 11, wherein the device is a processing device configured to control a user equipment (UE) in a wireless communication system.

14. A method performed by a base station (BS), the method comprising:
transmitting information about channel state information (CSI) reporting configuration to a user equipment (UE) via higher layer signaling; and
receiving, from the UE, a CSI report for L CSI-reference signal (CSI-RS) resources from among K CSI-RS resources configured in the UE,
wherein, from among the L CSI-RS resources, P CSI-RS resources are determined through information about the CSI reporting configuration, and remaining L-P CSI-RS resources are selected by the UE, and
wherein the CSI report includes L-P CSI-RS resource indicators (CRIs) for the L-P CSI-RS resources selected by the UE.

15. A base station (BS) for wireless communication, the BS comprising:
a memory configured to store instructions; and
a processor configured to execute the instructions to perform operations,
wherein the operations of the processor include:
transmitting information about channel state information (CSI) reporting configuration to a user equipment (UE) via higher layer signaling; and
receiving, from the UE, a CSI report for L CSI-reference signal (CSI-RS) resources from among K CSI-RS resources configured in the UE,
wherein, from among the L CSI-RS resources, P CSI-RS resources are determined through information about the CSI reporting configuration, and remaining L-P CSI-RS resources are selected by the UE, and
wherein, the CSI report includes L-P CSI-RS resource indicators (CRIs) for the L-P CSI-RS resources selected by the UE.
